# EUROPEAN PATENT SPECIFICATION

(11) **EP 4 361 463 B1**
(45) Date of publication and mention of the grant of the patent: **13.08.2025**
(21) Application number: 22216046.7
(22) Date of filing: 22.12.2022
(51) Int. Cl.: B62K 25/04, B62K 25/28, F16F 9/32

(54) **REAR SHOCK ABSORBER HAVING TWO RESERVOIRS**
HINTERER STOSSDÄMPFER MIT ZWEI RESERVOIRS
AMORTISSEUR ARRIÈRE À DEUX RÉSERVOIRS

(30) Priority: 25.10.2022 TW 111211624 U
(43) Date of publication of application: 01.05.2024
(73) Proprietor: Bike Pow Co.,Ltd., 24344 New Taipei City (TW)
(72) Inventor: HUANG, CHIH-HANG, 24344 New Taipei City (TW)
(74) Representative: Cabinet Chaillot

(56) References cited:
- EP-A2- 1 419 911
- US-A1- 2008 314 708
- US-B2- 10 946 927
- US-B2- 11 273 682
- US-B2- 7 308 976

## Description

### CROSS REFERENCE TO RELATED APPLICATION

This application claims the benefit of Taiwan Patent Application Serial No. 111211624, filed on Oct. 25, 2022.

### BACKGROUND OF THE INVENTION

### 1. Field of the invention

The present invention relates to a shock absorber for scooters, in particular to a rear shock absorber having two reservoirs for scooters.

### 2. Description of the prior art

Scooters are convenient and highly mobile vehicles. Even with the improvement of environmental protection awareness, scooters are still indispensable in the lives of many people. In addition to traditional gasoline-fueled scooters, electric scooters have been booming in recent years. However, both gasoline-fueled scooters and electric scooters still need shock absorbers to provide shock absorbing effect in order to make riders feel more comfortable.

Currently available shock absorbers for scooters can be classified into two types, including single-reservoir shock absorber and dual-reservoirs shock absorber. A single-reservoir shock absorber mainly includes a shock absorbing body tube, a movable rod and a spring. The top of the shock absorbing body tube and the bottom end of the movable rod are connected to a scooter respectively, such that the top of the movable rod is connected to a piston and inserted into the shock absorbing body tube. Besides, the spring is sleeved on the periphery of the shock absorbing body tube and the movable rod. The spring is used to absorb the impact forces generated by upward vibration and downward vibration of the scooter when the scooter is moving. The shock absorbing body tube has damping oil therein. When the movable rod is driven by the spring to push the piston forward, the shock absorbing body tube can absorb the impact forces via the damping oil, such that the vibration of the spring is reduced so as to provide the buffering effect. However, the most obviously disadvantage thereof is that the length of the shock absorbing body tube is limited, so the stroke thereof is short, which reduces the buffering effect. Moreover, the zone between the piston and the shock absorbing body tube of the single-reservoir shock absorber and the shock absorber must have frequent large-area contact friction, so the abrasions of the two elements are series, which significantly reduces the buffering effect.

In order to improve the shortcomings of the single-reservoir shock absorber, the dual-reservoirs shock absorber is developed. The dual-reservoirs shock absorber also includes a shock absorbing body tube, a movable rod and a spring, just like the single-reservoir absorbing body tube. The difference between the dual-reservoirs shock absorber and the single-reservoir shock absorber is that the shock absorbing body tube thereof is further connected to an assistant shock absorbing body tube. The assistant shock absorbing body tube is connected to the shock absorbing body tube via an oil path. Therefore, when the piston moves forward, the damping oil in the shock absorbing body tube will slowly enter the assistant shock absorbing body tube along the oil path to increase the stroke thereof. In this way, the dual-reservoirs shock absorber can provide the buffering effect to make the rider feel more stable and comfortable so as to conform to the requirements of most riders in their daily lives. However, currently available dual-reservoirs shock absorbers are more complicated to manufacture because they have too many parts, and the volume and weight thereof are also larger. Thus, it is very hard to apply the currently available dual-reservoirs shock absorbers to small vehicles, such as scooters. It is necessary to design different dual-reservoirs shock absorbers for different scooters, which increases the cost thereof. Further, it is also hard to repair and maintain the dual-reservoirs shock absorbers installed on scooters.

As mentioned above, the currently available shock absorbers still have many defects in manufacturing, use, and maintenance, which need to be further. Especially in the case of insufficient space, the configuration of the reservoirs are limited, which may affect the installation and performance of shock absorbers. The inventor of the present invention has tried hard to improve currently available devices in order to improve the shortcomings of prior art. After conducting research and experiments for many years, the inventor of the present invention successfully develops a rear shock absorber having two reservoirs.

Document US 10 946 927 B2 discloses a relevant rear shock absorber having two reservoirs, comprising a connecting main body having an installation hole and an oil path, wherein one end of a shock absorber is inserted into the installation hole and the oil path is connected to an inner space of the shock absorber and a fixation base connected to a lateral opening of the connecting main body.

### SUMMARY OF THE INVENTION

To achieve the foregoing objective, the present invention provides a rear shock absorber having two reservoirs, which includes a connecting main body, a fixation base, a fixation reservoir and a linked-pipe reservoir. One side of the connecting main body may be provided with a connecting hole. A connecting slot of the connecting main body may engage with a snap-fit hook of the fixation base. A first connecting hole of the connecting main body may be connected to the fixation reservoir and a second connecting hole of the fixation base may be connected to the linked-pipe reservoir.

Each of the fixation reservoir and the linked-pipe reservoir has a buffer room. The connecting main body is provided with an installation hole and a shock absorber is inserted into the installation hole. The connecting main body has an oil path disposed therein and the damping oil inside the oil path flows to the buffer room of the fixation reservoir. Another shock absorber is connected to the linked-pipe reservoir via an oil pipe and the damping oil therein flows to the buffer room of the linked-pipe reservoir. According to the present invention, the fixation reservoir and the linked-pipe reservoir are disposed at the same side of the rear shock absorber. Thus, the shock absorbers disposed at the two sides of the scooter can achieve the buffering effect for the vibration when the scooter is moving, which can also solve the problem that the installation space of the scooter is insufficient.

In one embodiment of the present invention, the connecting main body and the fixation base are provided with the damping oil, and the damping oil can be adjusted by a damping adjustment mechanism.

In one embodiment of the present invention, the fixation reservoir and the linked-pipe reservoir are parallel to each other.

In one embodiment of the present invention, there is a distance between the fixation reservoir and the linked-pipe reservoir in horizontal direction.

In one embodiment of the present invention, the connecting main body is connected to the fixation base via a snap-fit hook and a connecting slot. The connecting main body, the fixation reservoir, the linked-pipe reservoir and the fixation base are connected to each other via screw threads.

### BRIEF DESCRIPTION OF THE DRAWINGS

For a better understanding of the aforementioned embodiments of the invention as well as additional embodiments thereof, reference should be made to the Description of Embodiments below, in conjunction with the following drawings in which like reference numerals refer to corresponding parts throughout the figures.
Fig. 1 is an assembly view of a rear shock absorber having two reservoirs in accordance with one embodiment of the present invention.
Fig. 2 is an exploded view of the rear shock absorber having two reservoirs in accordance with one embodiment of the present invention.
Fig. 3 is a side view of the rear shock absorber having two reservoirs in accordance with one embodiment of the present invention.
Fig. 4 is another side view of the rear shock absorber having two reservoirs in accordance with one embodiment of the present invention.
Fig. 5 is a schematic view of the two reservoirs connected to the two shock absorbers disposed at the left side and right side of a scooter in accordance with one embodiment of the present invention.

### DETAILED DESCRIPTION OF THE PREFERRED EMBODIMENT

The following description is about embodiments of the present invention; however it is not intended to limit the scope of the present invention.

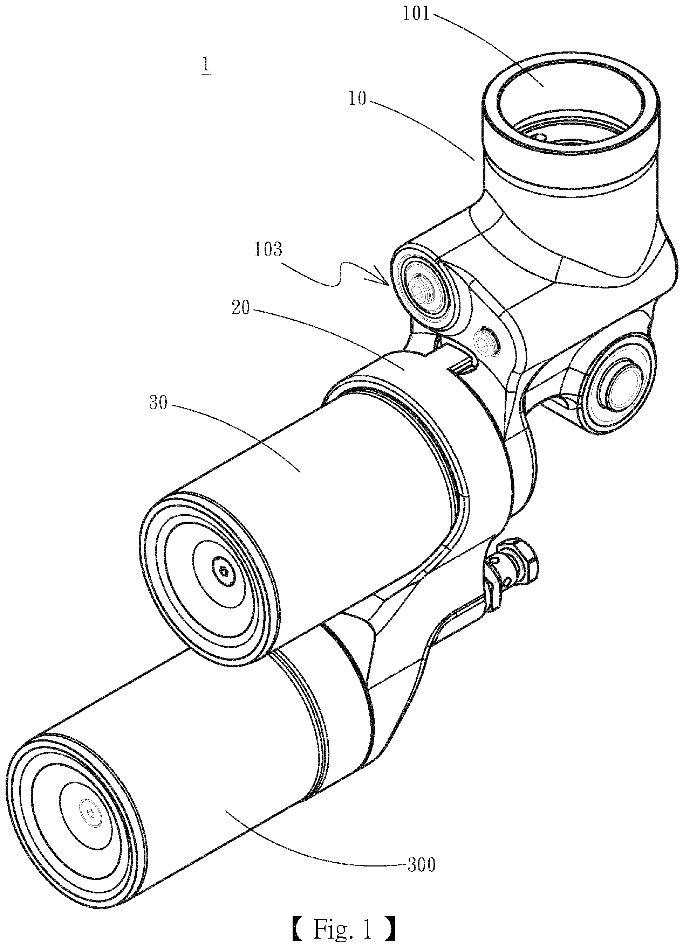

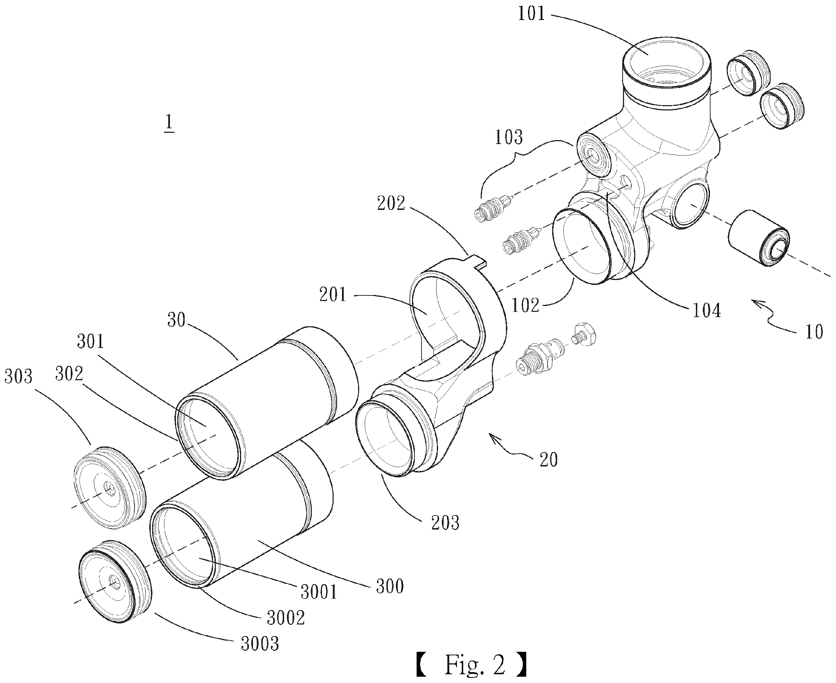

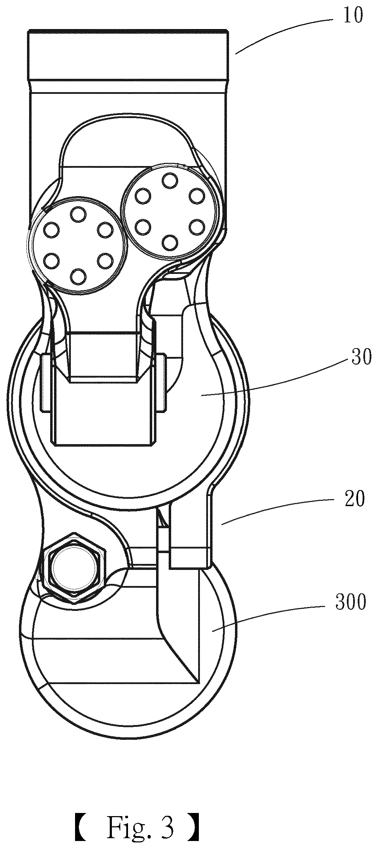

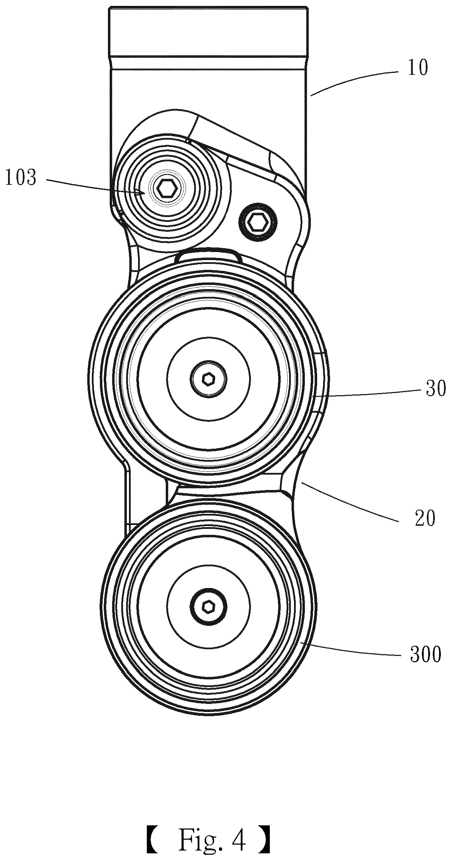

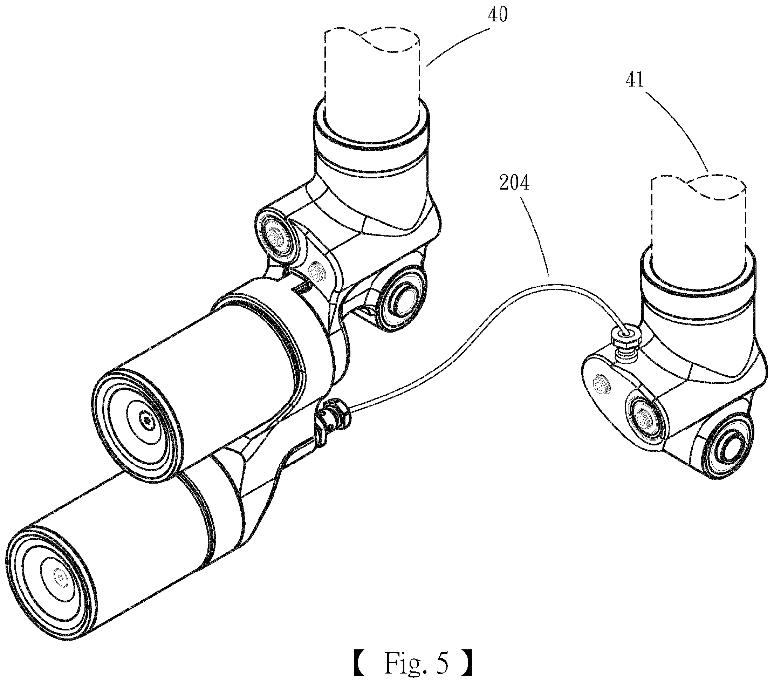

Please refer to Fig. 1 ~ Fig. 5, which are the views for illustrating a rear shock absorber having two reservoirs in accordance with one embodiment of the present invention. The rear shock absorber 1 having two reservoirs can be applied to a VESPA GT scooter. As shown in Fig. 1 ~ Fig. 5, the rear shock absorber 1 having two reservoirs includes a connecting main body 10, a fixation base 20, a fixation reservoir 30 and a linked-pipe reservoir 300. The connecting main body 10 is provided with an installation hole 101 and one end of a shock absorber 40 (as shown in Fig. 5) is inserted into the installation hole 101. One side of the connecting main body 10 is provided with a first connecting hole 102 and there is an oil path (not shown in the drawing) in the connecting main body 10. The damping oil in the connecting main body 10 can be adjusted by a damping adjustment mechanism 103 with a view to provide the buffering effect for the shock absorber 40 (as shown in Fig. 5). The fixation base 20 is connected to the first connecting hole 102 at one side of the connecting main body 10 and there is an oil path in the fixation base 20 (not shown in the drawings). The fixation reservoir 30 and the linked-pipe reservoir 300 are orderly disposed at one side of the fixation base 20. The fixation reservoir 30 has a buffer room 301 and the linked-pipe reservoir 300 also has a buffer room 3001. The damping oil inside the oil path of the connecting main body 10 can flow to the buffer room 301 of the fixation reservoir 30 via the fixation base 20. The rear shock absorber 41 at another side (as shown in Fig. 5) can be connected to the linked-pipe reservoir 300 via an oil pipe 204 and the damping oil can flow to the buffer room 3001 inside the linked-pipe reservoir 300.

To sum up, the fixation reservoir 30 and the linked-pipe reservoir 300 are two separated elements disposed at the fixation base 20. The two reservoirs are not connected to each other, but the two reservoirs are connected to the shock absorber 40 and the shock absorber 41 respectively; the shock absorber 40 and the shock absorber 41 are disposed at the two sides of the scooter respectively.

In one embodiment, the connecting main body 10 is connected to the fixation base 20 via a snap-fit hook 202 and a connecting slot 104. Besides, the connecting main body 10 and the fixation reservoir 30 are connected to each other via screw threads; the fixation base 20 and the linked-pipe reservoir 300 are also connected to each other via screw threads.

One end of the fixation reservoir 30 passes through the opening 201 of the fixation base 20 to connect to the first connecting hole 102 of the connecting main body 10 and another end of the fixation reservoir 30 has a first opening 302, which is connected to a first sealing cover 303 via screw threads and covered by the first sealing cover 303.

One end of the linked-pipe reservoir 300 is connected to the second connecting hole 203 of the fixation base 20 and another end of the linked-pipe reservoir 300 has a second opening 3002, which is connected to a second sealing cover 3003 via screw threads and covered by the second sealing cover 3003.

In one embodiment, the fixation reservoir 30 is disposed above the linked-pipe reservoir 300, and the fixation reservoir 30 and the linked-pipe reservoir 300 are parallel to each other.

In one embodiment, there is a distance between the fixation reservoir 30 and the linked-pipe reservoir 300 in horizontal direction.

As set forth above, the objective of the present invention is to dispose two reservoirs at one side of the rear shock absorber of a scooter in order to take full advantage of the space in the rear shock absorber. The above structure is simple and convenient to repair. Besides, the assembly of the above structure can be easily realized and the installation cost thereof can be decreased.

The above disclosure is related to the detailed technical contents and inventive features thereof. Those skilled in the art may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A rear shock absorber (1) having two reservoirs (30,300), comprising:
a connecting main body (10) having an installation hole (101) and an oil path, wherein one end of a shock absorber (40) is inserted into the installation hole (101) and the oil path is connected to an inner space of the shock absorber;
a fixation base (20) connected to a lateral opening of the connecting main body (10);
a fixation reservoir having a buffer room, wherein a damping oil inside the oil path of the connecting main body (10) is connected to the buffer room (301) of the fixation reservoir (30) via the oil path; and
a linked-pipe reservoir (300) having a buffer room (301, 3001), wherein a damping oil inside an oil path of a connecting main body (10) of another shock absorber (41) is connected to the buffer room (3001) of the linked-pipe reservoir (300) via an oil pipe.

2. The rear shock absorber having two reservoirs of claim 1, wherein the fixation reservoir and the linked-pipe reservoir are orderly disposed at one side of the fixation base.

3. The rear shock absorber having two reservoirs of claim 2, wherein the fixation reservoir and the linked-pipe reservoir are parallel to each other.

4. The rear shock absorber having two reservoirs of claim 3, wherein there is a distance between the fixation reservoir and the linked-pipe reservoir in a horizontal direction.

5. The rear shock absorber having two reservoirs of claim 4, wherein the connecting main body is connected to the fixation base via a snap-fit hook and a connecting slot.

6. The rear shock absorber having two reservoirs of claim 5, wherein the connecting main body, the fixation reservoir, the linked-pipe reservoir and the fixation base are connected to each other via screw threads.

7. The rear shock absorber having two reservoirs of claim 6, wherein one end of the fixation reservoir passes through an opening of the fixation base to connect to a first connecting hole of the connecting main body and another end of the fixation reservoir has a first opening covered by a first sealing cover.

8. The rear shock absorber having two reservoirs of claim 7, wherein one end of the linked-pipe reservoir is connected to a second connecting hole of the fixation base and another end of the linked-pipe reservoir has a second opening covered by a second sealing cover.

## Patentansprüche

1. Hinterer Stoßdämpfer (1) mit zwei Reservoirs (30, 300), umfassend:
einen verbindenden Hauptkörper (10) mit einem Installationsloch (101) und einem Ölpfad, wobei ein Ende eines Stoßdämpfers (40) in das Installationsloch (101) eingeführt ist und der Ölpfad mit einem inneren Raum des Stoßdämpfers verbunden ist;
eine Fixierungsbasis (20), die mit einer seitlichen Öffnung des verbindenden Hauptkörpers (10) verbunden ist;
ein Fixierungsreservoir mit einem ersten Pufferraum, wobei ein Dämpfungsöl innerhalb des Ölpfads des verbindenden Hauptkörpers (10) mit dem Pufferraum (301) des Fixierungsreservoirs (30) mit Hilfe des Ölpfads verbunden ist; und
ein Reservoir mit vebundenem Rohr (300) mit einem Pufferraum (301, 3001), wobei ein Dämpfungsöl innerhalb eines Ölpfads eines verbindenden Hauptkörpers (10) eines anderen Schalldämpfers (41) mit dem Pufferraum (3001) des Reservoirs mit vebundenem Rohr (300) mit Hilfe eines Ölrohrs verbunden ist.

2. Hinterer Stoßdämpfer mit zwei Reservoirs nach Anspruch 1, wobei das Fixierungsreservoir und das Reservoir mit vebundenem Rohr der Reihe nach an einer Seite der Fixierungsbasis angeordnet sind.

3. Hinterer Stoßdämpfer mit zwei Reservoirs nach Anspruch 2, wobei das Fixierungsreservoir und das Reservoir mit vebundenem Rohr parallel zueinander sind.

4. Hinterer Stoßdämpfer mit zwei Reservoirs nach Anspruch 3, wobei eine Distanz zwischen dem Fixierungsreservoir und das Reservoir mit vebundenem Rohr in einer horizontalen Richtung vorhanden ist.

5. Hinterer Stoßdämpfer mit zwei Reservoirs nach Anspruch 4, wobei der verbindende Hauptkörper mit der Fixierungsbasis mit Hilfe eines Schnapphakens und eines verbindenden Schlitzes verbunden ist.

6. Hinterer Stoßdämpfer mit zwei Reservoirs nach Anspruch 5, wobei der verbindende Hauptkörper, das Fixierungsreservoir, das Reservoir mit vebundenem Rohr und die Fixierungsbasis miteinander mit Hilfe von Schraubengewinden verbunden sind.

7. Hinterer Stoßdämpfer mit zwei Reservoirs nach Anspruch 6, wobei ein Ende des Fixierungsreservoirs durch eine Öffnung der Fixierungsbasis verläuft, um mit einem ersten Verbindungsloch des verbindenden Hauptkörpers verbunden zu sein, und ein anderes Ende des Fixierungsreservoirs eine erste Öffnung aufweist, die durch eine erste Versiegelungsabdeckung abgedeckt ist.

8. Hinterer Stoßdämpfer mit zwei Reservoirs nach Anspruch 7, wobei ein Ende des Reservoirs mit vebundenem Rohr mit einem zweiten verbindenden Loch der Fixierungsbasis verbunden ist und ein anderes Ende des Reservoirs mit vebundenem Rohr eine zweite Öffnung aufweist, die von einer zweiten Versiegelungsabdeckung abgedeckt ist.

## Revendications

1. Amortisseur arrière (1) à deux réservoirs (30, 300), comprenant :
un corps principal de liaison (10) comportant un trou d'installation (101) et un chemin d'huile, une extrémité d'un amortisseur (40) étant introduite dans le trou d'installation (101) et le chemin d'huile étant relié à un espace intérieur de l'amortisseur ;
une base de fixation (20) reliée à une ouverture latérale du corps principal de liaison (10) ;
un réservoir de fixation ayant une chambre tampon, une huile d'amortissement à l'intérieur du chemin d'huile du corps principal de liaison (10) étant reliée à la chambre tampon (301) du réservoir de fixation (30) par l'intermédiaire du chemin d'huile ; et
un réservoir à tuyau lié (300) ayant une chambre tampon (301, 3001), une huile d'amortissement à l'intérieur d'un chemin d'huile d'un corps principal de liaison (10) d'un autre amortisseur (41) étant reliée à la chambre tampon (3001) du réservoir à tuyau lié (300) par l'intermédiaire d'un tuyau d'huile.

2. Amortisseur arrière à deux réservoirs selon la revendication 1, dans lequel le réservoir de fixation et le réservoir à tuyau lié sont disposés de façon ordonnée sur un côté de la base de fixation.

3. Amortisseur arrière à deux réservoirs selon la revendication 2, dans lequel le réservoir de fixation et le réservoir à tuyau lié sont parallèles entre eux.

4. Amortisseur arrière à deux réservoirs selon la revendication 3, dans lequel il y a une distance entre le réservoir de fixation et le réservoir à tuyau lié dans une direction horizontale.

5. Amortisseur arrière à deux réservoirs selon la revendication 4, dans lequel le corps principal de liaison est relié à la base de fixation par un crochet d'encliquetage et une fente de liaison.

6. Amortisseur arrière à deux réservoirs selon la revendication 5, dans lequel le corps principal de liaison, le réservoir de fixation, le réservoir à tuyau lié et la base de fixation sont reliés entre eux par l'intermédiaire de filetages de vis.

7. Amortisseur arrière à deux réservoirs selon la revendication 6, dans lequel une extrémité du réservoir de fixation passe à travers une ouverture de la base de fixation pour être reliée à un premier trou de liaison du corps principal de liaison et une autre extrémité du réservoir de fixation a une première ouverture couverte par un premier couvercle d'étanchéité.

8. Amortisseur arrière à deux réservoirs selon la revendication 7, dans lequel une extrémité du réservoir à tuyau lié est raccordée à un second trou de liaison de la base de fixation et une autre extrémité du réservoir à tuyau lié comporte une seconde ouverture couverte par un second couvercle d'étanchéité.
